# EUROPÄISCHE PATENTANMELDUNG

(11) **EP 4 432 424 A2**
(43) Veröffentlichungstag der Anmeldung: **18.09.2024**
(21) Anmeldenummer: 24161649.9
(22) Anmeldetag: 06.03.2024
(51) Int. Cl.: H01M 10/613, F28D 1/03, H01M 10/625, H01M 10/6556, H01M 10/6568, H01M 50/249

(54) **KÜHLPLATTE MIT MINDESTENS EINEM FLUIDKANAL ZUR TEMPERIERUNG EINES ELEKTRISCHEN ANTRIEBSENERGIESPEICHERS EINES FAHRZEUGES SOWIE VERFAHREN ZUR HERSTELLUNG EINER SOLCHEN KÜHLPLATTE**

(30) Priorität: 14.03.2023 DE 102023202300
(71) Anmelder: VOLKSWAGEN AG, 38440 Wolfsburg (DE)
(72) Erfinder: Baumbach, Jakob, 38106 Braunschweig (DE); Disse, Christian, 38114 Braunschweig (DE); Mittwollen, Jan, 38106 Braunschweig (DE)

(57) **Zusammenfassung**

Die Erfindung betrifft eine Kühlplatte (10) mit mindestens einem Fluidkanal (12) zur Temperierung, insbesondere Kühlung, eines elektrischen Antriebsenergiespeichers eines Fahrzeuges, wobei mindestens eine Einlassöffnung (14) für den Fluidkanal (12) vorgesehen ist und wobei mindestens eine Auslassöffnung (16) für den Fluidkanal (12) vorgesehen ist. An der Kühlplatte (10) ist durch Anordnung mindestens eines Separierelements (22) eine Fluidkanalkreuzung (FK) derart ausgebildet, dass das Kühlfluid, welches einen ersten Teilabschnitt der Fluidkanalkreuzung (FK) durchströmt, von dem Kühlfluid, welches einen zweiten Teilabschnitt der Fluidkanalkreuzung (FK) durchströmt, fluidal separiert kreuzen kann.

## Beschreibung

Die Erfindung betrifft eine Kühlplatte mit mindestens einem Fluidkanal zur Temperierung, insbesondere Kühlung, eines elektrischen Antriebsenergiespeichers eines Fahrzeuges sowie ein Verfahren zur Herstellung einer solchen Kühlplatte. Darüber hinaus wird auch auf Fahrzeuge mit einer solchen Kühlplatte verwiesen. Mit solchen Fahrzeugen sind sowohl Land-, Luft- als auch Wasserfahrzeuge gemeint. Die Erfindung bezieht sich aber insbesondere auf Landfahrzeuge in Form von Kraftfahrzeugen und Krafträdern. Mit einem Antriebsenergiespeicher in Sinne der Erfindung sind insbesondere für den Vortrieb genutzte Energiespeicher gemeint, wie z.B. Li-Ionen-Akkumulatoren, Natrium-Ionen-Akkumulatoren oder Feststoffbatterien. Kühlplatten für solche Antriebsenergiespeicher werden üblicherweise unmittelbar unterseitig und/oder unmittelbar oberseitig und/oder entlang einer oder mehrerer Seitenflächen der Antriebsenergiespeicher derart angeordnet, dass Wärme von den Kühlplatten aufgenommen und über ein die Kühlplatten durchströmendes Kühlfluid abgeführt werden kann.

Aus WO 2017/029158 A1 ist eine Separatorplatte für ein elektrochemisches System bekannt, die aus einer ersten Einzelplatte und aus einer mit der ersten Einzelplatte verbundenen zweiten Einzelplatte gebildet ist. Dabei wird insbesondere auf Separatorplatten von Brennstoffzellensystemen und Elektrolyseuren Bezug genommen. Die offenbarte Separatorplatte weist mehrere Kanäle auf, die teilweise sich überkreuzend angeordnet sind. Die Separatorplatte soll auch in einem Bereich, in dem die Kanäle der Einzelplatten relativ zueinander gekreuzt verlaufen, möglichst stabil sein und mit möglichst geringem Ausschuss herstellbar sein. Dazu sind verschiedene Ausprägungen eingeformter Stege, Kanäle und bestimmte Kanalverläufe in der ersten Einzelplatte und der zweiten Einzelplatte beschrieben. Es wird weder auf Kühlplatten für elektrische Antriebsenergiespeicher von Kraftfahrzeugen noch auf über die Einzelplatten hinausgehend Elemente verwiesen.

Aus WO 2011/110497 A2 ist eine Kühlvorrichtung für leistungsfähige elektrische Antriebsenergiespeicher bekannt, wie sie in Kraftfahrzeugen mit ausschließlich elektrischem Antrieb (reine Elektrofahrzeuge) oder ergänzendem elektrischem Antrieb (Hybridfahrzeuge) vorgesehen sind. Die Kühlvorrichtung weist sich in unterschiedlichen Ebenen kreuzende Kältemittelkanäle auf, wobei einer der beiden sich kreuzenden Kältemittelkanäle einen Vorströmungskanal und der andere der beiden sich kreuzenden Kanäle einen Rückströmungskanal für ein Kältemittel bildet. Es werden eine Criss-cross Kältemittelschaltung und alternativ eine "Twist"-Kältemittelschaltung vorgeschlagen, um durch möglichst viele sich kreuzende Kanäle in verschiedenen Ebenen Kanalschaltungen zur Verfügung zu stellen, die eine ungleichmäßige Verteilung der Temperatur minimiert bzw. eine stabile Temperaturverteilung ermöglicht. Die Kühlvorrichtung selbst und die Kältemittelschaltungen sind nur schematisch dargestellt und funktional erläutert, aber hinsichtlich der geometrischen Kanalgestaltung nicht im Detail beschrieben oder gezeigt. Insbesondere ist auch nichts zur Zahl der Einzelelemente, zur geometrischen Gestaltung der Einzelelemente oder zur Relativanordnung der Einzelelemente der Kühlvorrichtung offenbart.

Aus der Praxis bekannte Kühlplatten für elektrische Antriebsenergiespeicher weisen in vielen Fällen mindestens einen Einlass-Stutzen zum Einleiten von Kühlfluid in den mindestens einen Fluidkanal und mindestens einen Auslass-Stutzen zum Ausleiten von Kühlfluid aus dem Fluidkanal auf. Häufig sind genau ein Einlass-Stutzen und genau ein Auslass-Stutzen vorgesehen, um das System einfach zu halten, insbesondere um die Wahrscheinlichkeit einer Undichtigkeit während der Lebensdauer zu reduzieren. Das Kühlfluid wird dann in den Einlass-Stutzen eingeleitet, durch eine vorgegebene Kanalstruktur des Fluidkanals innerhalb der Kühlplatte geführt und tritt durch den Auslass-Stutzen wieder aus. Bei gelöteten oder anderweitig aus zwei Halbschalen (Kühlplattenhälften) gebildeten Kühlplatten werden diese miteinander verbunden. Die Stutzen (Einlass-Stutzen und Auslass-Stutzen) werden dann mit den jeweils vorgesehenen Öffnungen (Einlassöffnung bzw. Auslassöffnung) des Fluidkanals verbunden. Durch eine entsprechende Verformung (insbesondere Tiefziehen) der beiden Kühlplattenhälften (oder auch nur einer der Kühlplattenhälften), die vor und/oder zumindest auch teilweise nach dem Verbinden der Plattenhälften durchgeführt werden kann, wird der Fluidkanal oder werden die ggf. mehreren Fluidkanäle gebildet. Hinsichtlich der Herstellung wird insbesondere auf das Tiefziehen der Kühlplattenhälften und auf das Roll-Bond-Verfahren verwiesen. Die Erfindung betrifft insbesondere Kühlplatten, die aus zwei Kühlplattenhälften oder mehr Kühlplattenelementen zusammengesetzt sind, insbesondere aus einer ebenen Kühlplatte und einer Kühlplatte mit eingeformten Kanälen oder aus zwei Kühlplatten mit eingeformten Kanälen.

Bei der Wahl der Fluidkanalführung solcher Kühlplatten muss ein Kompromiss aus Fertigbarkeit, Kosten, Druckverlust, Massenstromverteilung und Stabilität (Berstfähigkeit) gefunden werden.

Die Verteilung des Kühlfluids zur gezielten, möglichst homogenen Temperierung der Batteriezellen des Antriebsenergiespeichers erfolgt in der Praxis üblicherweise über eine entsprechende Kanalführung, bei der einzelne Kühlkanäle parallel zueinander verlaufen und/oder seriell miteinander verbunden werden. Die einzelnen Kühlkanäle sollen sich dabei nicht derart kreuzen, dass sich das Kühlfluid der sich kreuzenden Kühlkanäle vermengt, weil dann die Kühlkanäle kurzgeschlossen würden, was die Funktionsfähigkeit der Temperierung (insbesondere Kühlung) negativ beeinträchtigen oder stromabwärts einer solchen Stelle sogar vollständig außer Kraft setzen würde, insbesondere wenn aufgrund eines Kurzschließens ein Bereich entstünde, welcher überhaupt nicht mehr mit Kühlfluid durchströmt wird. Abhängig vom Bauraum ergeben sich durch diese Rahmenbedingungen ungünstige Kühlkanaltopologien, welche häufig zu Temperaturinhomogenitäten in der Kühlplatte und daraus resultierend zu einer unterschiedlichen Kühlung verschiedener Batteriezellen oder ganzen Zellstacks von Antriebsenergiespeichern führen oder andererseits zu einem hohen Druckverlust. Es können auch mehrere Einlass-Stutzen und/oder Verteilerstrukturen vorgesehen sein, um durch eine geeignete parallele Fluidführung die Temperaturhomogenität zu verbessern. Diese ist jedoch mit erhöhtem Gewicht und erhöhtem Bauraumbedarf verbunden.

Der Begriff "Kühlfluid" im Sinne der Erfindung ist weit auszulegen, d.h. es werden sowohl Flüssigkeiten als auch Gase von dem Begriff umfasst. Ferner soll mit dem Begriff keine bestimmte Temperatur verknüpft sein, sondern es soll lediglich zum Ausdruck gebracht werden, dass es sich um Fluid zur Temperierung handelt. Dabei kann es sich trotz des Begriffs auch temporär um Kühlfluid handeln, dessen Temperatur höher ist als die Temperatur eines zu temperierenden Gegenstandes, insbesondere ein Zellstack eines Antriebsenergiespeichers. Dies kann insbesondere der Fall sein, wenn das Fluid für eine beschleunigte Aufheizung des Antriebsenergiespeichers genutzt werden soll, beispielsweise bei niedrigen Außentemperaturen, oder wenn das Kühlfluid bereits im Laufe des Strömungsweges Wärme aufgenommen hat und die aktuelle Temperatur dadurch höher ist als die Temperatur des umströmten Gegenstandes. Nichtsdestotrotz ist der Haupt-Einsatzzweck des Kühlfluides Wärme aus den Zellstacks eines Antriebsenergiespeichers abzuführen und diesen damit zu kühlen.

Der Erfindung liegt die Aufgabe zugrunde, eine Kühlplatte mit mindestens einem Fluidkanal zur Temperierung (insbesondere Kühlung) eines elektrischen Antriebsenergiespeichers eines Fahrzeuges sowie ein Verfahren zur Herstellung einer solchen Kühlplatte zur Verfügung zu stellen, welche bei verhältnismäßig einfacher Herstellung eine flexiblere Fluidkanalführung ermöglichen, insbesondere um eine möglichst gleichmäßige Temperierung der Kühlplatte - und daraus resultierend auch eines Antriebsenergiespeichers - im Betrieb zu erzielen.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Kühlplatte weist mindestens einen Fluidkanal zur Temperierung, insbesondere Kühlung, eines elektrischen Antriebsenergiespeichers eines Fahrzeuges auf, wobei mindestens eine Einlassöffnung für den Fluidkanal vorgesehen ist und mindestens eine Auslassöffnung für den Fluidkanal vorgesehen ist. Dabei ist an der Kühlplatte durch Anordnung mindestens eines Separierelements eine Fluidkanalkreuzung derart ausgebildet, dass das Kühlfluid, welches einen ersten Teilabschnitt der Fluidkanalkreuzung durchströmt, von dem Kühlfluid, welches einen zweiten Teilabschnitt durchströmt, fluidal separiert kreuzen kann. Die erfindungsgemäße Kühlplatte schafft damit die Voraussetzung, Kühlplatten, insbesondere durch Verbindung von zwei Kühlplattenhälften (Halbschalen), auf einfache Art und Weise um (mindestens) eine Fluidkanalkreuzung zu ergänzen und damit eine flexiblere Fluidkanalführung zu ermöglichen. Dies wird insbesondere dadurch erzielt, dass die Fluidkanalkreuzung es ermöglicht, dass Kühlfluidströme, die unterschiedliche Temperaturen im Bereich der Fluidkanalkreuzung aufweisen, aneinander vorbei geführt werden können, ohne dass sich die Kühlfluidströme durchmischen.

Eine erfindungsgemäße Kühlplatte ist vorzugsweise unmittelbar benachbart zu Batteriezellen oder Zellstacks eines elektrischen Antriebsenergiespeichers angeordnet, um von den Zellen produzierte Wärme abführen zu können. Es wird insoweit auch auf eine Anordnung einer erfindungsgemäßen Kühlplatte an Zellen eines elektrischen Antriebsenergiespeichers sowie auf ein Fahrzeug, insbesondere Kraftfahrzeug, mit einer solchen Anordnung verwiesen.

Die Herstellung einer erfindungsgemäßen Kühlplatte kann besonders einfach und kostengünstig erfolgen, wenn das Separierelement eine Grundfläche aufweist, die einen Bruchteil der Grundfläche der Kühlplatte beträgt. Mit einem Bruchteil ist insbesondere eine Fläche gemeint, die maximal 10 Prozent der Grundfläche der Kühlplatte beträgt, bevorzugt maximal 8 Prozent, weiter bevorzugt maximal 5 Prozent und besonders bevorzugt maximal 3 Prozent. Insbesondere erstreckt sich das Separierelement nur über den Bereich der Fluidkanalkreuzung selbst oder einen sich unwesentlich um die Fluidkanalkreuzung herum erstreckenden Umgebungsbereich der Fluidkanalkreuzung. Damit ist insbesondere eine Kanal-Strömungslänge gemeint, welche sich über das Zwei- bis Dreifache der maximalen Längserstreckung der jeweiligen Fluidkanalkreuzung erstreckt.

Weist die Fluidkanalkreuzung beispielsweise bei sich senkrecht kreuzenden Fluidkanälen maximal die größte Breite einer der Fluidkanäle auf, beträgt die maximale Erstreckung des Separierelements das Zwei- bis Dreifache der maximalen Breite des Fluidkanals im Bereich der Fluidkanalkreuzung. In diesem Fall ist die Größe und das zusätzliche Gewicht des Separierelements relativ klein im Verhältnis zu den Maßen und dem Gewicht der Kühlplatte, so dass sich die Bauteilabmessungen durch die erfindungsgemäße Gestaltung einer Kühlplatte im Vergleich zu Kühlplatten ohne solche Fluidkanalkreuzungen nur unwesentlich verändern. Ein weiterer Vorteil der Gestaltung eines Separierelements, das nur eine geringe Grundfläche aufweist, besteht darin, eine aus dem Stand der Technik bekannte Kühlplatte durch eine sich nur auf die Umgestaltung eines verhältnismäßig kleinen Flächenbereichs der Kühlplatte konzentriert, so dass eine erfindungsgemäße Gestaltung mit relativ geringem Zusatzaufwand auch nachträglich an einer Kühlplatte realisierbar ist.

In einer weiteren praktischen Ausführungsform einer erfindungsgemäßen Kühlplatte ist das Separierelement als Kanalelement mit mindestens einem fluidal separierten Teilkanal ausgebildet. Der Vollständigkeit halber wird darauf hingewiesen, dass ein als Kanalelement ausgebildetes Separierelement auch zwei oder mehr fluidal separierte Teilkanäle aufweisen kann. Beispielsweise können zwei fluidal separierte Teilkanäle ausgebildet sein, um sowohl den ersten Teilabschnitt, als auch den zweiten Teilabschnitt in dem Kanalelement selbst auszubilden. Auf weitere Einzelheiten hinsichtlich eines als Kanalelement ausgebildeten Separierelements wird nachfolgend, insbesondere in Verbindung mit den Figuren, noch im Detail eingegangen.

Alternativ oder in Ergänzung zu einem Separierelement mit mindestens einem fluidal separierten Teilkanal ist in dem Separierelement in einer weiteren praktischen Ausführungsform eine thermische Trennschicht vorgesehen. Durch die Ausbildung einer thermischen Trennschicht kann eine thermische Isolierung unterschiedlich temperierter Fluidströme vorteilhaft als integrales Element ohne zusätzlichen Bauraumbedarf realisiert werden.

In einer weiteren praktischen Ausführungsform einer erfindungsgemäßen Kühlplatte ist das Separierelement zumindest teilweise komplementär zu den korrespondieren Fluidkanalabschnitten in dem Bereich der Fluidkanalkreuzung ausgebildet, in welchem das Separierelement angeordnet ist. Bei solchen Fluidkanalabschnitten handelt es sich insbesondere um ausgeformte Vertiefungen, beispielsweise im Querschnitt v-förmig oder u-förmig ausgeformte Halbschalen. Eine solche Gestaltung hat den Vorteil, dass die Position eines Separierelements innerhalb der Fluidkanalkreuzung aufgrund der komplementären Gestaltung eindeutig vorgegeben ist. Dies erleichtert die Fertigung und verringert das Risiko von Fehlpositionierungen des Separierelements innerhalb der Fluidkanalkreuzung.

In einer weiteren praktischen Ausführungsform der erfindungsgemäßen Kühlplatte ist das Separierelement derart ausgebildet und in der Kühlplatte angeordnet und/oder zumindest ein Teilabschnitt im Bereich der Fluidkanalkreuzung der Kühlplatte derart ausgeformt, dass die Fluidkanalkreuzung eine Aufdickung aufweist. Mit einer Aufdickung der Fluidkanalkreuzung ist gemeint, dass die sich in Hochrichtung der Kühlplatte erstreckende Dicke im Bereich der Fluidkanalkreuzung lokal größer ist als in den sich jeweils seitlich anschließenden Bereichen der Kühlplatte. Eine derartige Aufdickung kann in dem Fall, dass das Separierelement derart ausgebildet und in der Kühlplatte angeordnet ist, insbesondere dadurch erfolgen, dass das Separierelement in Hochrichtung nach oben oder nach unten aus der Kühlplatte herausragend gestaltet ist. Dies kann insbesondere dadurch realisiert sein, dass an dem Separierelement eine ausgeformte, herausragende Vertiefung oder eine anderweitig nach oben oder unten herausragende Struktur ausgebildet ist.

Wenn die Fluidkanalkreuzung eine Aufdickung aufweist, weil zumindest ein Teilabschnitt im Bereich der Fluidkanalkreuzung der Kühlplatte entsprechend ausgeformt ist, kann die Fluidkanalkreuzung auf einfache Art und Weise erzeugt werden, indem als Separierelement ein einfaches Blech zusätzlich zwischen zwei Kühlplattenhälften (Halbschalen) angeordnet wird, bevor die Kühlplattenhälften miteinander verbunden werden.

In einer weiteren praktischen Ausführungsform der erfindungsgemäßen Kühlplatte ist das Separierelement als Brückenelement derart ausgebildet, dass der erste Teilabschnitt aus einem Bereich vor der Fluidkanalkreuzung durch abdichtende Anordnung des Brückenelements den zweiten Teilabschnitt überströmend, unterströmend und/oder durchströmend angeordnet ist.

Dabei sind mit den Begriffen überströmend und unterströmend sowohl Gestaltungen gemeint, bei welchen das Brückenelement tatsächlich aus der Ebene der Kühlplatte nach oben oder unten herausragend angeordnet ist, als auch solche Gestaltungen, bei welchen das Brückenelement vollständig innerhalb der Ebene der Kühlplatte angeordnet ist, d. h. zwischen zwei Kühlplattenhälften.

Mit einer durchströmenden Anordnung ist insbesondere eine Anordnung gemeint, in welcher das Brückenelement eine geringere Dicke aufweist als die Kühlplatte selbst, so dass es durch eine - insbesondere in Hochrichtung - mittige Anordnung innerhalb der Kühlplatte noch ausreichend Raum zur Verfügung stellt, um sowohl über- als auch unterströmt zu werden von dem Fluid, welches das Brückenelement kreuzt.

Eine besonders einfache Herstellung einer erfindungsgemäßen Kühlplatte ergibt sich, wenn das Brückenelement als Aufsatzelement oder Einsatzelement derart ausgebildet ist, dass es durch Aufsetzen auf eine Außenfläche oder durch Einsetzen in eine vorbereitete Vertiefung oder durch Einsetzen in eine vorbereitete Ausnehmung montierbar ist. Denn in diesem Fall lässt sich die Ergänzung eines Brückenelements bei der Herstellung einer Kühlplatte besonders einfach und kostengünstig in einen bereits bestehenden Montageprozess integrieren. In diesem Zusammenhang wird insbesondere auf Brückenelemente verwiesen, welche eine planare Seite und einen umlaufenden Kragen aufweisen, mit welchem das Brückenelement von außen in eine Halbschale, insbesondere ein planares Deckblech, eingesetzt werden kann. Der Kragen kann sowohl zur Positionierung als auch zur Abdichtung genutzt werden, insbesondere indem ein Fügeprozess durchgeführt wird oder zusätzliche Dichtmittel eingesetzt werden. Hinsichtlich eines Fügeprozesses wird insbesondere auf Verkleben, Verschweißen und Verlöten verwiesen. Durch ein vorheriges Auftragen von Lot- und/oder Flussmittel zwischen einer Halbschale und einem Brückenelement kann das Fügen des Brückenelements in die Halbschale im gleichen Arbeitsgang erfolgen wie das Fügen der beiden Halbschalen, insbesondere durch Beschicken eines Lötofens. Alternativ kann ein derartig ausgebildetes Brückenelement auch mittels eines Rollbondverfahrens hergestellt werden.

In einer weiteren praktischen Ausführungsform einer erfindungsgemäßen Kühlplatte ist das Separierelement derart gestaltet, dass sich zumindest in einem Teilabschnitt des Separierelements im Wesentlichen der gleiche effektive hydraulische Durchmesser ergibt wie unmittelbar stromaufwärts und stromabwärts dieses Teilabschnitts. Dies ist insbesondere für solche Separierelemente relevant, deren Querschnitt in Hochrichtung im Bereich der Fluidkanalkreuzung verringert ist, weil die sich kreuzenden Querschnitte übereinander, aber fluidal voneinander separiert verlaufen. In diesem Fall ist es besonders bevorzugt, zur Erzielung des gleichen oder eines annähernd gleichen effektiven hydraulischen Durchmessers die Breite im Bereich der Fluidkanalkreuzung zu erhöhen.

Die Erfindung betrifft auch ein Verfahren zur Herstellung einer Kühlplatte mit mindestens einem Fluidkanal zur Temperierung, insbesondere Kühlung, eines elektrischen Antriebsenergiespeichers eines Fahrzeuges, wobei mindestens eine Einlassöffnung für den Fluidkanal vorgesehen ist und mindestens eine Auslassöffnung für den Fluidkanal vorgesehen ist. Dabei wird mindestens ein Separierelement derart im Bereich des Fluidkanals angeordnet, dass das Kühlfluid eines ersten Teilabschnitts von dem Kühlfluid eines zweiten Teilabschnitts fluidal separiert kreuzen kann. Auf die Möglichkeiten zur geometrischen Gestaltung eines entsprechenden Separierelements, welche vorstehend in Verbindung mit der erfindungsgemäßen Kühlplatte erläutert wurden, wird hiermit noch einmal verwiesen. Das Einbringen eines solchen Separierelements ist besonders einfach und kostengünstig möglich, insbesondere wenn eine Kühlplatte aus zwei Halbschalen oder mehr als zwei Schalen gebildet ist und das Separierelement vor, während oder nach dem Fertigungsprozess lediglich hinzugefügt werden muss. Dabei ist es besonders bevorzugt, wenn der Fügeprozess der Halbschalen für die Befestigung des Separierelements in bzw. an der Kühlplatte genutzt werden kann.

In einer weiteren praktischen Ausführungsform des erfindungsgemäßen Verfahrens wird das Separierelement vor, während oder nach der Herstellung der Kühlplatte durch Verbindung von zwei Halbschalen eingebracht und dichtend mit dem ersten Teilabschnitt und/oder mit dem zweiten Teilabschnitt verbunden. Eine dichtende Verbindung wird vorzugsweise gleichzeitig mit der Verbindung der beiden Halbschalen hergestellt, indem das Separierelement derart ausgebildet und angeordnet wird, dass der Verbindungsprozess für die beiden Halbschalen auch für die abdichtende Anordnung des Separierelements innerhalb der Kühlplatte genutzt werden kann.

Weitere praktische Ausführungsformen der Erfindung sind nachfolgend im Zusammenhang mit den Zeichnungen beschrieben. Es zeigen:
- Fig. 1: nur eine erste Halbschale einer erfindungsgemäßen Kühlplatte mit einer schematischen Darstellung eines Fluidkanals, der ausgehend von einer Einlassöffnung in drei Teilkanäle aufgeteilt wird, um parallel zueinander angeordnete Hin- und Rückströmkanäle sowie eine Wiederzusammenführung des Kühlfluids vor einer Auslassöffnung zu ermöglichen,
- Fig. 2: eine Detailansicht des in Fig. 1 mit K gekennzeichneten Bereichs in einer Ansicht von der Rückseite (Halbschale aus Fig. 1 um 180° gedreht) mit transparenter Darstellung des Separierelements,
- Fig. 3: nur das Separierelement aus Figur 2 in einer Ansicht von oben,
- Fig. 4: eine Detailansicht nur eines Teilbereichs der Fluidkanalkreuzung der Kühlplatte aus Figur 1 mit einer zweiten Ausführungsform eines Separierelements, das als Einsatzelement in Form eines Brückenelements ausgebildet und in eine Halbschale eingesetzt ist, wobei die zweite Halbschale nicht dargestellt ist, in einer isometrischen Darstellung,
- Fig. 5: die gleiche Ansicht wie in Figur 4, wobei das Separierelement teilweise transparent dargestellt ist, um die fluidal separierten, durch das Separierelement führenden Teilabschnitte sichtbar zu machen,
- Fig. 6: eine Explosionsdarstellung einer Kühlplatte mit einem Separierelement, wie in den Figuren 4 und 5 gezeigt, in einer isometrischen Darstellung,
- Fig. 7: eine Explosionsdarstellung der Kühlplatte aus Figur 1 mit einer dritten Ausführungsform eines Separierelements, das als Einsatzelement in Form eines Brückenelements ausgebildet ist, in einer isometrischen Darstellung,
- Fig. 8: nur das Separierelement aus Figur 7 in einer isometrischen Darstellung von schräg unten,
- Fig. 9: nur das Separierelement aus Figur 7 in einer teilweise transparenten isometrischen Darstellung von schräg oben,
- Fig. 10: eine Schnittdarstellung durch die Anordnung eines Separierelements in einer Halbschale gemäß Linie X-X in Figur 9,
- Fig. 11: eine Schnittdarstellung durch die Anordnung eines Separierelements in einer Halbschale gemäß Linie XI-XI in Figur 9,
- Fig. 12: eine Ansicht gemäß dem Pfeil A auf das Separierelement in Figur 9, welches entlang der Linie XII-XII geschnitten dargestellt ist,
- Fig. 13: eine weitere Ausführungsform eines Separierelements, das im Wesentlichen der Gestaltung des Separierelements aus den Figuren 7 bis 12 entspricht, jedoch zusätzlich eine thermische Trennschicht aufweist in einer Ansicht analog zu der Darstellung in Figur 12,
- Fig. 14: eine weitere Ausführungsform eines Separierelements, das einen fluidal separierten Teilkanal aufweist und innerhalb einer Vertiefung einer Fluidkanalkreuzung mit zwei sich kreuzenden Fluidkanälen derart angeordnet ist, dass es in Querrichtung zum Teilkanal sowohl unter- als auch überströmt wird,
- Fig. 15: nur das Separierelement aus Figur 14 in einer isometrischen Darstellung von schräg oben mit schematischer Darstellung der Fluidströme durch den Teilkanal und in Querrichtung dazu,
- Fig. 16: nur das Separierelement aus den Figuren 14 und 15 in einer Ansicht gemäß dem Pfeil XVI in Figur 15 in Strömungsrichtung durch den Teilkanal,
- Fig. 17: eine weitere Ausführungsform eines Separierelements, das als blechartiges, ebenes Element ausgebildet ist in einer Längsschnittdarstellung einer Kühlplatte mit einer in einer Halbschale ausgebildeten Aufdickung und
- Fig. 18: nur das Separierelement aus Figur 17 mit der Halbschale, in welcher die Aufdickung ausgebildet ist in einer Ansicht gemäß dem Pfeil XVIII in Figur 17 ohne die oberseitige Halbschale.

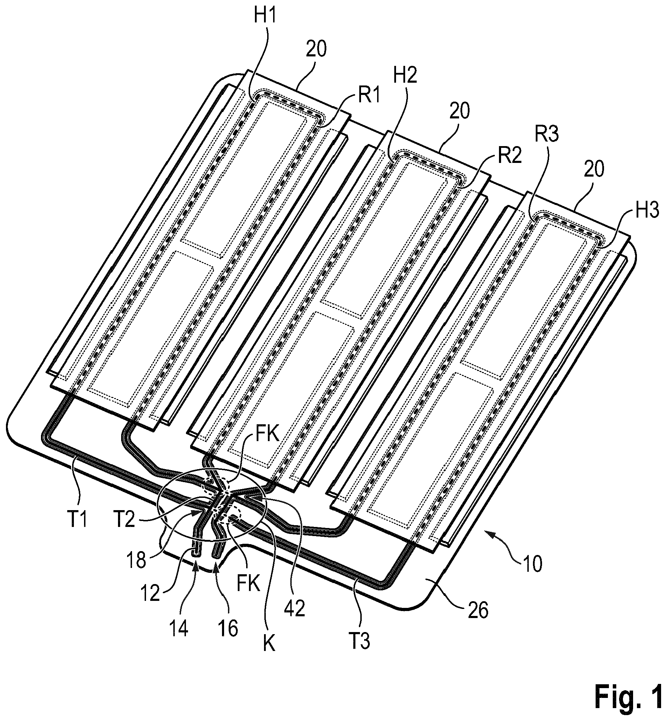

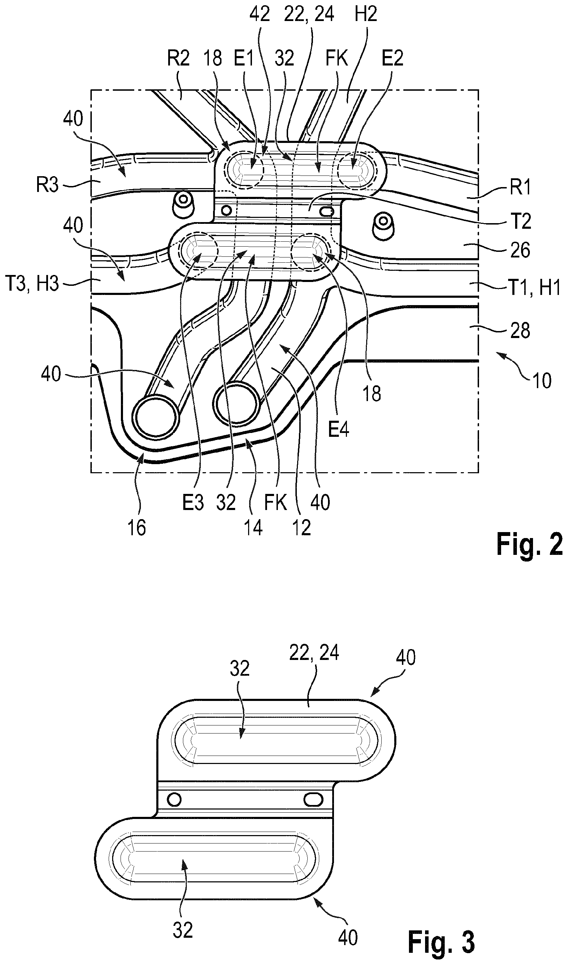

Figur 1 zeigt eine erfindungsgemäße Kühlplatte 10 mit einem Fluidkanal 12, welcher im Wesentlichen durch Ausformung von in Figur 1 nicht gut erkennbaren (weil rückseitigen) Vertiefungen in einer ersten Halbschale 26 ausgebildet ist. Die erste Halbschale 26 wird zur Herstellung der vollständigen Kühlplatte 10 mit einer in Figur 1 nicht dargestellten zweiten Kühlplatte (siehe Fig. 2) verbunden, wobei die zweite Kühlplatte in dieser Ausführungsform eine ebene Platte ist.

Der Fluidkanal 12 führt von einer Einlassöffnung 14 bis zu einer Auslassöffnung 16. Bei der gezeigten Ausführungsform weist der Fluidkanal 12 nahe der Einlassöffnung 14 einen Abzweig 18 auf, an welchem sich der Fluidkanal 12 in drei Teilkanäle T1, T2, T3 aufteilt. Die Teilkanäle T1, T2, T3 führen innerhalb der Kühlplatte 10 parallel zueinander von der Seite, auf welcher die Einlassöffnung 14 ausgebildet ist zur gegenüberliegenden Seite. Von dieser Seite aus werden die Teilkanäle T1, T2, T3 jeweils parallel zurückgeführt. Der jeweilige Hinströmkanal ist mit H1, H2, H3 gekennzeichnet, der Rückströmkanal mit R1, R2, R3.

Die Gestaltung des Fluidkanals 12 ermöglicht es, im benachbarten Bereich unterhalb der jeweiligen Hin- und Rückströmkanäle H1, R1; H2, R2; H3, R3 angeordnete Zellstacks 20 gleichmäßig zu temperieren, insbesondere zu kühlen, da der jeweilige Hinstrom H1, H2, H3 nicht erwärmtes Kühlfluid umfasst, welches über die Einlassöffnung in die Kühlplatte 10 eingeströmt ist, wohingegen der jeweilige Rückstrom R1, R2, R3 Kühlfluid umfasst, welches bereits über die Länge eines Zellstacks 20 erwärmt worden ist. Geht man davon aus, dass sich die Zellstacks 20 jeweils etwa gleichmäßig erwärmen, erfolgt eine gleichmäßige Temperierung aller Zellstacks 20.

Aus Figur 1 ist auch ersichtlich, dass die Gestaltung des Fluidkanals 12, wie in Figur 1 gezeigt, in dem mit K gekennzeichneten Bereich eine Gestaltung mit insgesamt zwei Fluidkanalkreuzungen FK erfordert, die jeweils ein fluidal separiertes Kreuzen von Fluidströmen ermöglichen.

Unmittelbar stromabwärts des Abzweigs 18 folgt eine erste Fluidkanalkreuzung FK, wo sich der mittlere Hinstrom H2 und der Rückstrom R1 kreuzen, aber fluidal voneinander separiert sind.

Analog zu der Gestaltung mit Abzweig 18 und Fluidkanalkreuzung FK im Bereich des Hinstroms befinden sich stromaufwärts vor der Auslassöffnung 16 eine Fluidkanalkreuzung des Hinstroms H3 mit dem Rückstrom und eine Sammelstelle 42, wo die Rückströme R1, R2 und R3 zusammengeführt werden.

Im Folgenden wird anhand von verschiedenen Ausführungsbeispielen erläutert, wie Fluidkanalkreuzungen FK, insbesondere in dem in Figur 1 mit K gekennzeichneten Bereich, gestaltet sein können, um einen ersten Teilabschnitt der Fluidkanalkreuzung FK fluidal von einem zweiten Teilabschnitt der Fluidkanalkreuzung FK zu separieren.

In den Figuren 2 und 3 ist zunächst eine Detailansicht des mit K in Figur 1 gekennzeichneten Bereichs mit einer ersten Ausführungsform eines Separierelements 22 gezeigt, das als Aufsatzelement in Form eines Brückenelements 24 ausgebildet ist. In Figur 2 ist auch erkennbar, dass die Kühlplatte 10 aus einer ersten Halbschale 26 und einer zweiten Halbschale 28 gebildet ist. Dabei ist auch zu erkennen, dass die erste Halbschale 26 eine etwas kleinere Grundfläche aufweist als die zweite Halbschale 28. Bei der ersten Halbschale 28 handelt es sich um ein im wesentlichen ebenes Blech. Bei der ersten Halbschale 26 handelt es sich um ein vorgeformtes Blech, welches zur Ausbildung des Fluidkanals 12 in Hochrichtung senkrecht zur Erstreckungsrichtung der ersten Halbschale 26 und der zweiten Halbschale 28 ausgebildete Vertiefungen 40 aufweist.

In Figur 2 ist eine Detaildarstellung des in Figur 1 mit K gekennzeichneten Bereichs dargestellt, wobei die Halbschale 26 im Vergleich zu Figur 1 um 180° gedreht dargestellt ist. Dadurch sind die Fluidkanalkreuzungen FK, der Abzweig 18 sowie alle übrigen Elemente jeweils an den der Verdrehung der Halbschale 26 entsprechenden Stellen angeordnet. Wie in Figur 2 erkennbar ist, ist die sich von der Einlassöffnung 14 erstreckende, von unten nach oben erstreckende Vertiefung 40 kontinuierlich über das Separierelement 22 hinweg ausgebildet. Das Gleiche gilt für die sich von der Auslassöffnung 16 von unten nach oben über das Separierelement 22 erstreckende Vertiefung 40.

Die quer zu den vorstehend genannten Vertiefungen 40 von links nach rechts verlaufenden Vertiefungen 40 hingegen enden jeweils an den mit E1, E2, E3 und E4 gekennzeichneten Endabschnitten im Bereich des Separierelements 22. Um eine fluidal separierte Verbindung von dem Endpunkt E1 zu dem Endpunkt E2 und von dem Endpunkt E3 zu dem Endpunkt E4 zu erzielen, sind in dem Separierelement 22 entsprechende Vertiefungen 40 ausgebildet, welche es ermöglichen, dass Kühlfluid aus dem Bereich zwischen der ersten Halbschale 26 und der zweiten Halbschale 28 in den Bereich zwischen der ersten Halbschale 26 und dem Separierelement 22 strömt. So kann sich über die Einlassöffnung 14 einströmendes Fluid im Bereich des Abzweiges 18 in die drei Hinströme H1, H2, H3 aufteilen. Analog dazu können die Rückströme R1, R2, R3 in der Sammelstelle 42 wieder zusammenfließen. Für die fluidale Separierung weist das Separierelement 22 jeweils eine Aufdickung 32 auf, welche die Endpunkte E1 und E2 sowie die Endpunkte E3 und E4 überbrückt. Das Separierelement 22 ist daher in dieser Ausführungsform als Brückenelement 24 ausgebildet. Das Separierelement 22 ist dazu dichtend an der ersten Halbschale 26 derart befestigt, dass Kühlfluid nur über die jeweilige Aufdickung 32 von dem Endpunkt E1 zu dem Endpunkt E2 und über die weitere Aufdickung 32 von dem Endpunkt E3 zu dem Endpunkt E4 strömen kann.

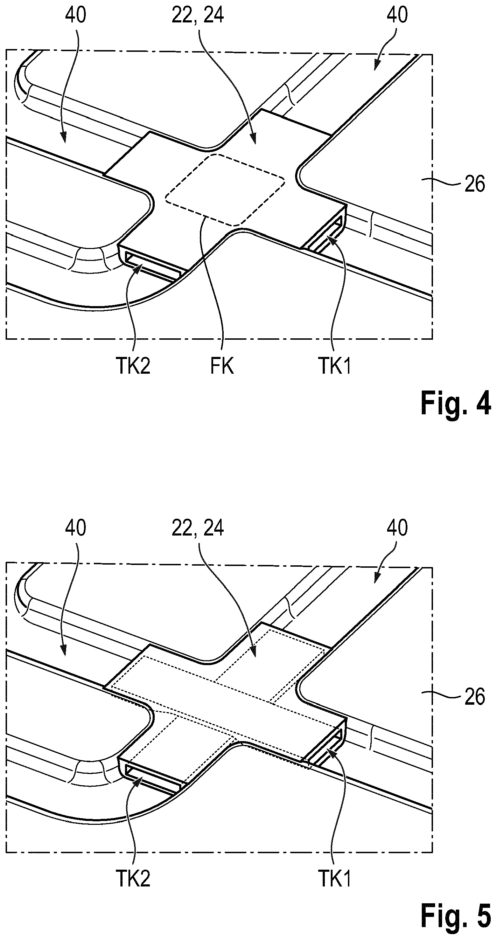

In den Figuren 4 und 5 ist eine Detailansicht nur eines Teilbereichs der Fluidkanalkreuzung FK der Kühlplatte 10 aus Figur 1 in einer Ansicht von unten mit einer zweiten Ausführungsform eines Separierelements 22 gezeigt, das als Einsatzelement in Form eines Brückenelements 24 ausgebildet ist. Wie sich aus einer Zusammenschau der Figuren 4 und 5 ergibt, ist das als Kanalelement ausgebildete Separierelement 22 komplementär zu den korrespondierenden Vertiefungen 40 in den Fluidkanalabschnitten in dem Bereich der Fluidkanalkreuzung FK ausgebildet, in welchem das Separierelement 22 angeordnet ist. In dem als Kanalelement ausgebildeten Separierelement 22 sind zwei fluidal separierte Teilkanäle TK1, TK2 ausgebildet, die sich kreuzen, aber fluidal voneinander separiert sind. Diese Gestaltung ermöglicht es, eine Fluidkanalkreuzung FK mit fluidal voneinander separierten Teilkanälen TK1, TK2 zu realisieren. In Figur 5 ist gut erkennbar, dass der Teilkanal TK1 oberhalb des Teilkanals TK2 verläuft, in dem die Höhe der jeweiligen Teilkanäle TK1, TK2 im Bereich der Fluidkanalkreuzung FK entsprechend verringert ist.

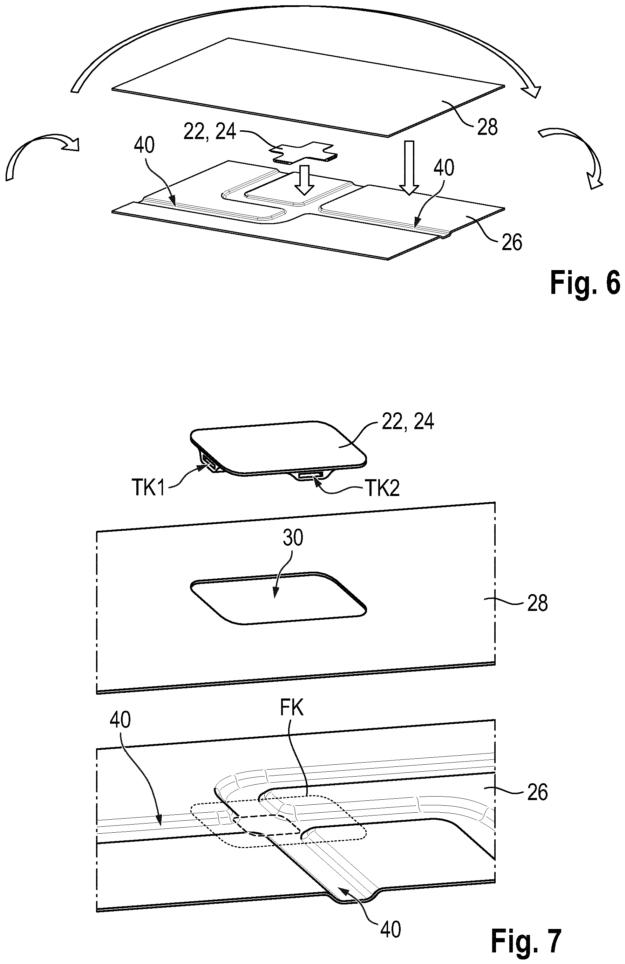

Die Montage einer erfindungsgemäßen Kühlplatte 10 mit einem wie in den Figuren 4 und 5 gezeigten Separierelement 22 kann insbesondere so erfolgen, wie es in Figur 6 schematisch dargestellt ist. In einem ersten Schritt wird eine umgeformte Halbschale, hier dargestellt am Beispiel der ersten Halbschale 26, mit einem Flussmittel (nicht dargestellt) bestrichen, insbesondere mit einem für einen Lötprozess geeigneten Flussmittel. Das Flussmittel kann alternativ oder in Ergänzung funktional als Dichtmittel ausgelegt sein, so dass es das Separierelement 22 im (späteren) Betrieb abdichtet, insbesondere indem es schmale Spalte zwischen den Halbschalen schließt.

In einem zweiten Verfahrensschritt wird das Separierelement 22 in eine vorbehandelte Halbschale eingelegt, hier in die erste Halbschale 26.

In einem weiteren Verfahrensschritt wird die zweite Halbschale 28, welche bedarfsweise ebenfalls mit Flussmittel bestrichen sein kann, auf die erste Halbschale 26 aufgelegt.

Schließlich werden in einem letzten Verfahrensschritt die beiden Halbschalen, 26, 28 fest miteinander verbunden, insbesondere durch Verlöten in einem Lötofen.

Der Vollständigkeit halber wird noch darauf hingewiesen, dass das Separierelement auch durch anderweitiges Fügen mit der Halbschale 26 verbindbar ist, insbesondere durch Verschweißen, Verkleben und/oder andere geeignete Verbindungstechniken. Es ist auch möglich, das Verbinden unabhängig vom Verbinden der Halbschalen zuvor oder anschließend durchzuführen.

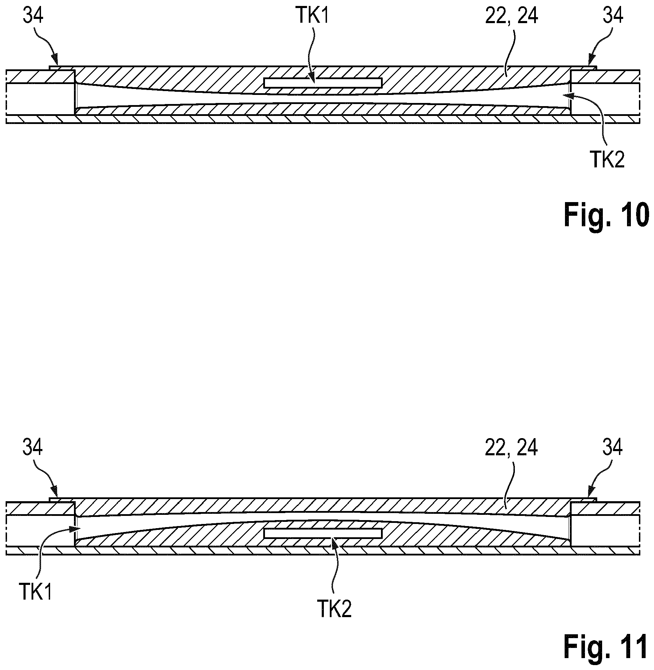

Figur 7 zeigt eine Explosionsdarstellung der erfindungsgemäßen Kühlplatte 10 aus Figur 1 mit einer dritten Ausführungsform eines Separierelements 22, das als Einsatzelement in Form eines Brückenelements 24 ausgebildet ist, in einer isometrischen Darstellung. Bei dieser Ausführungsform ist in der zweiten Halbschale 28 eine Ausnehmung 30 in Form eines Freischnitts vorgesehen. Die Ausnehmung 30 entspricht im Wesentlichen in Form und Größe dem Hauptteil des Separierelement 22, soweit dieses dort eingesetzt ist. Im Übrigen entspricht das Separierelement 22 im Wesentlichen dem Separierelement 22, welches in Verbindung mit den Figuren 4 und 5 im Detail erläutert wurde. Abweichend hierzu weist das in Figur 7 gezeigte Separierelement 22 eine ungefähr quadratische Grundfläche mit einem Kragen 34 auf, welcher im montierten Zustand flächig auf der zweiten Halbschale 28 aufliegt. Dies ist in Figur 10 gut erkennbar.

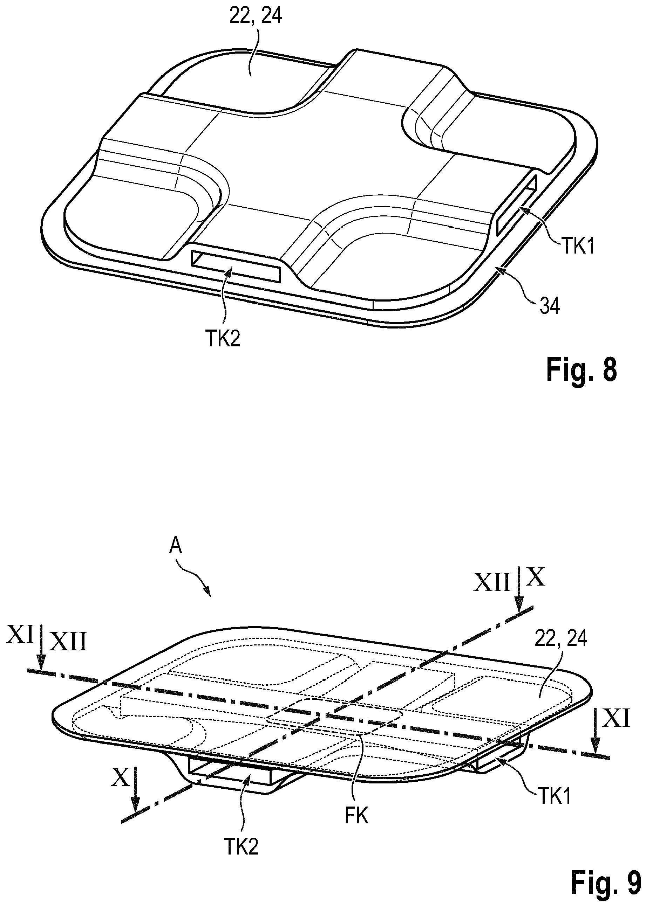

Wie sich aus einer Zusammenschau der Figuren 8-10 ergibt, ist der Kragen 34 umlaufend an dem Separierelement 22 ausgebildet.

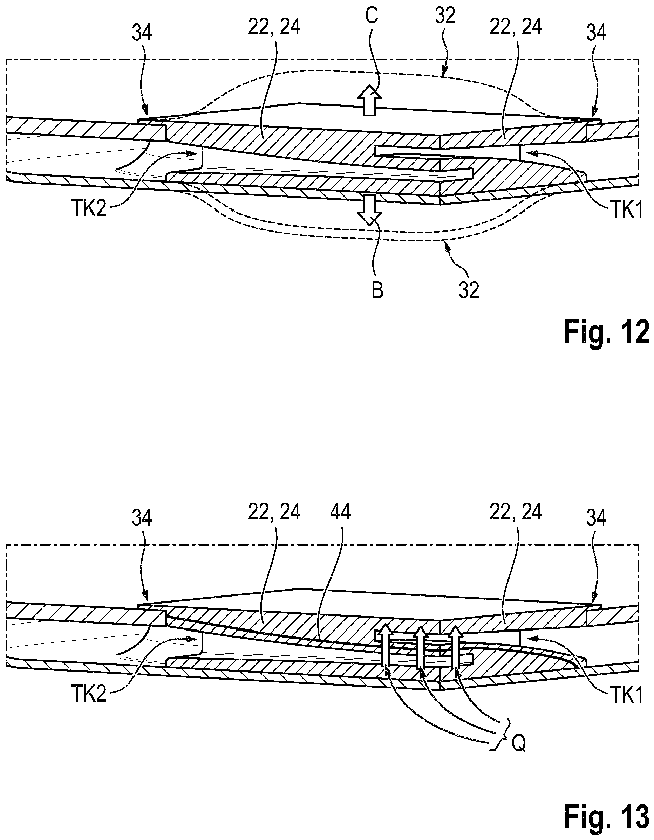

Figur 12 zeigt anhand der jeweils gestrichelten Linien im Endbereich der Pfeile B und C, dass optional an dem Separierelement 22 eine Aufdickung 32 erzeugbar ist, um den Strömungsquerschnitt des Teilkanals TK1 gemäß dem Pfeil C in Hochrichtung zu vergrößern, und/oder um den Strömungsquerschnitt des Teilkanals TK2 gemäß dem Pfeil B mittels einer Aufdickung sowohl an dem Separierelement 22 als auch an der ersten Halbschale 26 in Hochrichtung weiter zu vergrößern. Auch möglich ist es, nur eine Aufdickung an dem Separierelement 22 in Richtung des Pfeils B vorzunehmen. So kann bedarfsweise der gleiche effektive hydraulische Durchmesser oder ein annähernd gleicher Durchmesser im Bereich des Separierelement 22 erzeugt werden wie in den Bereichen, welche sich unmittelbar stromaufwärts und stromabwärts an das Separierelement 22 anschließen, insbesondere wenn dies ohne eine entsprechende Aufdickung 32 bauraumtechnisch nicht möglich ist.

Es kann jedoch auch sinnvoll sein, die Strömungsquerschnitte der Teilkanäle TK1 und TK2 bewusst als Drosselstellen so auszulegen, dass sich in der gesamten Kühlplatte erwünschte Strömungsverhältnisse zwischen einzelnen Hinströmen H1, H2, H3 und/oder zwischen einzelnen Rückströmen R1, R2, R3 und/oder insgesamt zwischen allen oder einer Auswahl von Hinströmen H1, H2, H3 und Rückströmen R1, R2, R3 einstellen.

Figur 13 zeigt ein Separierelement 22 in Form eines Brückenelements 24 analog zu dem in den Figuren 7-12 gezeigten Separierelement 22 mit dem Unterschied, dass zwischen dem Teilkanal TK1 und dem Teilkanal TK2 einer thermische Trennschicht 44 vorgesehen ist, welche einem durch die Pfeile Q visualisieren Wärmeübergang entgegenwirken.

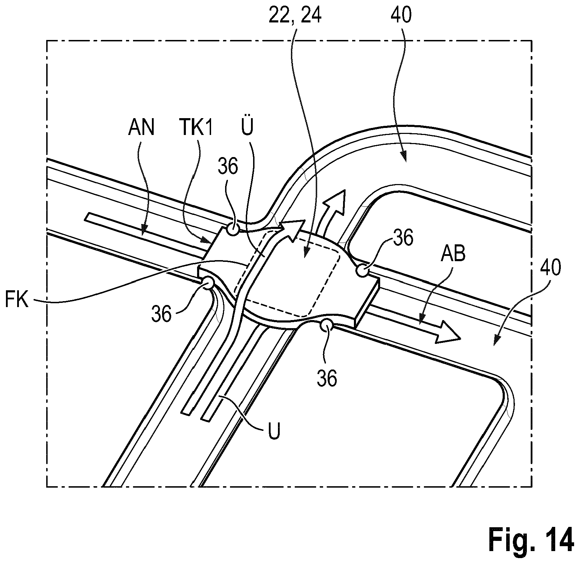

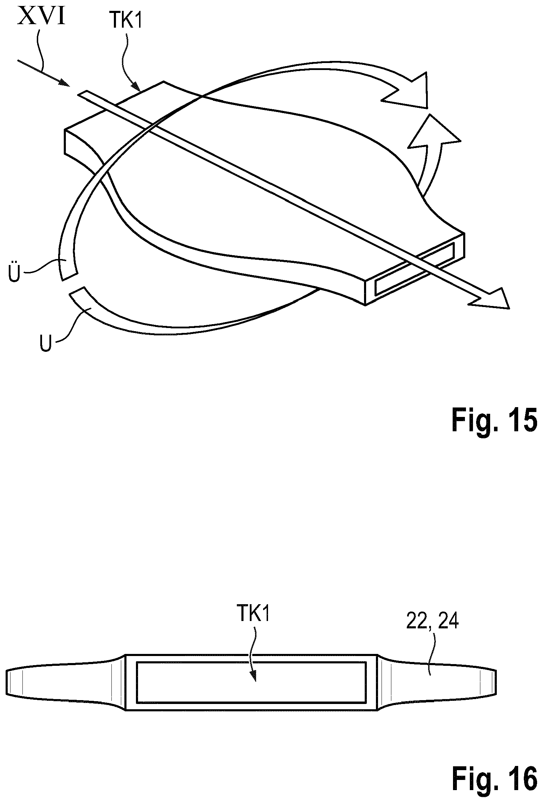

In den Figuren 14-16 ist eine weitere Ausführungsform eines Separierelements 22 in Form eines Brückenelements 24 dargestellt, welches sowohl über- als auch unterströmt wird. Das Separierelement 22 weist nur einen Teilkanal TK1 auf, welcher eine sichere Überführung eines Fluids aus einem Anströmbereich AN in einen Abströmbereich AB führt. Dazu sind sowohl im Anströmbereich AN als auch im Abströmbereich AB entsprechende Dichtabschnitte 36 vorgesehen, welche sicherstellen, dass Kühlfluid nur aus dem Anströmbereich AN durch den Teilkanal TK1 innerhalb des Separierelements 22 in den Abströmbereich AB gelangen kann. Gleichzeitig wird durch die Dichtabschnitte 36 sichergestellt, dass Kühlfluid, welches senkrecht zum Teilkanal strömt, das Separierelement 22 nur über- oder unterströmen kann, gemäß den Pfeilen Ü und U in den Figuren 14 und 15, das durch den Teilkanal TK1 geführte Kühlfluid fluidal separiert zu kreuzen.

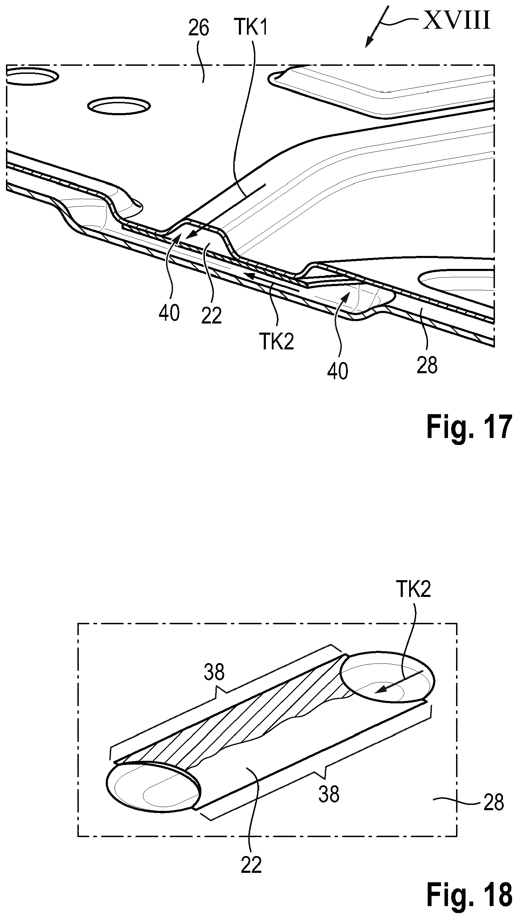

In den Figuren 17 und 18 ist eine weitere Ausführungsform eines Separierelements 22 gezeigt, das als blechartiges, ebenes Element ausgebildet ist. Dieses Separierelement 22 ist besonders einfach in seiner Herstellung und Befestigung, da es lediglich aus einem Blech oder sonstigen ebenen Material zugeschnitten werden muss. Zur Befestigung des Separierelements 22 genügt es, wenn linienförmige Dicht- bzw. Fügeabschnitte 38 entlang der Längskanten vorgesehen sind. Das in den Figuren 17 und 18 gezeigte, geometrisch sehr einfach gestaltete Separierelement 22 kann nur in Verbindung mit einer ersten Halbschale 26 und einer zweiten Halbschale 28 verwendet werden, welche jeweils eine geeignete Vertiefung 40 aufweisen, die gemeinsam mit den Separierelement 22 Teilkanäle TK1 und TK2 bilden, welche fluidal voneinander separiert sind.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Insbesondere wird darauf verwiesen, dass die Zahl der Hin- und Rückströme variabel gehalten werden kann, insbesondere indem die Zahl der Fluidkanalkreuzungen FK an den jeweiligen Bedarf angepasst wird.

### Bezugszeichenliste

- 10: Kühlplatte
- 12: Fluidkanal
- 14: Einlassöffnung
- 16: Auslassöffnung
- 18: Abzweig
- 20: Zellstack
- 22: Separierelement
- 24: Brückenelement
- 26: erste Halbschale
- 28: zweite Halbschale
- 30: Ausnehmung
- 32: Aufdickung
- 34: Kragen
- 36: Dichtabschnitt
- 38: Dicht- bzw. Fügeabschnitt
- 40: Vertiefung
- 42: Sammelstelle
- 44: Trennschicht
- FK: Fluidkanalkreuzung
- H1: Hinstrom
- H2: Hinstrom
- H3: Hinstrom
- K: Bereich mit Fluidkanalkreuzungen
- R1: Rückstrom
- R2: Rückstrom
- R3: Rückstrom
- T1: Teil-Fluidkanal
- T2: Teil-Fluidkanal
- T3: Teil-Fluidkanal
- TK1: Teilkanal 1 im/am Separierelement
- TK2: Teilkanal 2 im/am Separierelement

## Patentansprüche

1. Kühlplatte (10) mit mindestens einem Fluidkanal (12) zur Temperierung eines elektrischen Antriebsenergiespeichers eines Fahrzeuges, wobei mindestens eine Einlassöffnung (14) für den Fluidkanal (12) vorgesehen ist und wobei mindestens eine Auslassöffnung (16) für den Fluidkanal (12) vorgesehen ist,
**dadurch gekennzeichnet,**
**dass** an der Kühlplatte (10) durch Anordnung mindestens eines Separierelements (22) eine Fluidkanalkreuzung (FK) derart ausgebildet ist, dass das Kühlfluid, welches einen ersten Teilabschnitt der Fluidkanalkreuzung (FK) durchströmt, von dem Kühlfluid, welches einen zweiten Teilabschnitt der Fluidkanalkreuzung (FK) durchströmt, fluidal separiert kreuzen kann.

2. Kühlplatte (10) nach dem vorstehenden Anspruch, **dadurch gekennzeichnet, dass** das Separierelement (22) eine Grundfläche aufweist, die ein Bruchteil der Grundfläche der Kühlplatte (10) beträgt.

3. Kühlplatte (10) nach einem der vorstehenden Ansprüche, **dadurch gekennzeichnet, dass** das Separierelement (22) als Kanalelement mit mindestens einem fluidal separierten Teilkanal (TK1, TK2) ausgebildet ist und/oder in dem Separierelement (22) eine thermische Trennschicht vorgesehen ist.

4. Kühlplatte (10) nach einem der vorstehenden Ansprüche, **dadurch gekennzeichnet, dass** das Separierelement (22) zumindest teilweise komplementär zu den korrespondierenden Fluidkanalabschnitten in dem Bereich der Fluidkanalkreuzung (FK) ausgebildet ist, in welchem das Separierelement (22) angeordnet ist.

5. Kühlplatte (10) nach einem der vorstehenden Ansprüche, **dadurch gekennzeichnet, dass** das Separierelement (22) derart ausgebildet und in der Kühlplatte (10) angeordnet und/oder zumindest ein Teilabschnitt im Bereich der Fluidkanalkreuzung (FK) der Kühlplatte (10) derart ausgeformt ist, dass die Fluidkanalkreuzung (FK) eine Aufdickung (32) aufweist.

6. Kühlplatte (10) nach einem der vorstehenden Ansprüche, **dadurch gekennzeichnet, dass** das Separierelement (22) als Brückenelement (24) derart ausgebildet ist, dass der erste Teilabschnitt aus einem Bereich vor der Fluidkanalkreuzung (FK) durch abdichtende Anordnung des Brückenelements (24) den zweiten Teilabschnitt überströmend, unterströmend und/oder durchströmend angeordnet ist.

7. Kühlplatte (10) nach dem vorstehenden Anspruch, **dadurch gekennzeichnet, dass** das Brückenelement (24) als Aufsatzelement oder Einsatzelement derart ausgebildet ist, dass es durch Aufsetzen auf eine Außenfläche oder durch Einsetzen in eine vorbereitete Vertiefung (40) oder durch Einsetzen in eine vorbereitete Ausnehmung (30) montierbar ist.

8. Kühlplatte (10) nach einem der vorstehenden Ansprüche, **dadurch gekennzeichnet, dass** das Separierelement (22) derart gestaltet ist, dass sich zumindest in einem Teilabschnitt des Separierelements (22) im Wesentlichen der gleiche effektive hydraulische Durchmesser ergibt wie unmittelbar stromaufwärts und stromabwärts dieses Teilabschnitts.

9. Verfahren zur Herstellung einer Kühlplatte (10) mit mindestens einem Fluidkanal (12) zur Temperierung eines elektrischen Antriebsenergiespeichers eines Fahrzeuges, wobei mindestens eine Einlassöffnung (14) für den Fluidkanal (12) vorgesehen ist und mindestens eine Auslassöffnung (16) für den Fluidkanal (12) vorgesehen ist, **dadurch gekennzeichnet, dass** mindestens ein Separierelement (22) derart im Bereich des Fluidkanals (12) angeordnet wird, dass das Kühlfluid eines ersten Teilabschnitts von dem Kühlfluid eines zweiten Teilabschnitts fluidal separiert kreuzen kann.

10. Verfahren nach dem vorstehenden Anspruch, **dadurch gekennzeichnet, dass** das Separierelement (22) vor, während oder nach der Herstellung der Kühlplatte (10) durch Verbindung von zwei Halbschalen (26, 28) eingebracht und dichtend mit dem ersten Teilabschnitt und/oder mit dem zweiten Teilabschnitt verbunden wird.
